# FASCICULE DE BREVET EUROPEEN

(11) **EP 0 576 368 B1**
(45) Date de publication et mention de la délivrance du brevet: **20.12.1995**
(21) Numéro de dépôt: 93420250.8
(22) Date de dépôt: 16.06.1993
(51) Int. Cl.: A47J 42/56, A47J 43/046

(54) **Appareil électrique pour le traitement de produits alimentaires, avec dispositif perfectionné de sécurité**
Elektrogerät zur Verarbeitung von Nahrungsmitteln mit verbesserter Sicherheitsvorrichtung
Electric food processor with improved safety device

(30) Priorité: 17.06.1992 FR 9207607
(43) Date de publication de la demande: 29.12.1993
(73) Titulaire: SANTOS S.A., F-69120 Vaulx en Velin (FR)
(72) Inventeur: Venturati, Gérard, F-69660 Collonges (FR); Selves, Pierre, F-69500 Bron (FR); Burgel, Christian, F-69630 Chaponost (FR); Fouquet, Jacques, F-69005 Lyon (FR); Bertrand, née Cancade, Christiane, F-38200 Luzinay (FR); Bertrand, Jean-David, F-38200 Luzinay (FR); Bertrand, Maxime, F-38200 Luzinay (FR); Bertrand, Julien, F-38200 Luzinay (FR)
(74) Mandataire: Monnier, Guy

(56) Documents cités:
- EP-A- 0 012 976
- DE-C- 3 532 038
- FR-A- 1 164 016
- FR-A- 1 174 584
- FR-A- 2 340 706
- FR-A- 2 587 592
- FR-A- 2 649 878
- GB-A- 2 040 381
- GB-B- 925 773

## Description

La présente invention a trait aux appareils électriques, à usage domestique ou pour collectivités, destinés à la préparation et au traitement des produits alimentaires sous forme liquide, pâteuse ou solide, du genre des mixeurs-mélangeurs, centrifugeuses, broyeurs, pétrins, coupe-légumes, râpes, brise-glaçons et autres dispositifs du même type comprenant un outil de travail entraîné par un moteur électrique pour tourner au fond d'une cuve ou bol fermé par un couvercle amovible.

On sait que ces appareils sont généralement équipés d'un dispositif de sécurité propre à éviter tout risque de contact intempestif des doigts de l'utilisateur avec l'outil de travail alors que celui-ci est entraîné en rotation. Un tel dispositif de sécurité fait le plus souvent appel à un contacteur branché sur le circuit d'alimentation du moteur d'entraînement, lequel contacteur est agencé pour interdire tout passage de courant en direction du moteur lorsque le couvercle n'est pas correctement assujetti à la cuve ou bol de traitement.

Dans le document FR-A-2 587 592 (SANTOS), on a décrit un appareil centrifugeur pour la préparation de jus de fruits ou de légumes, doté d'un dispositif de sécurité qui s'est révélé particulièrement performant. On rappellera que ce dispositif comprenait en combinaison :
- des moyens de verrouillage prenant appui sur le couvercle en vue de l'appliquer contre le bord de l'ouverture supérieure du bol ;
- un mécanisme d'immobilisation agencé pour agir élastiquement sur l'arbre du moteur électrique en vue d'opérer son blocage angulaire ;
- un contacteur électrique qui est branché sur le circuit d'alimentation du moteur précité et qui tend élastiquement à maintenir ouvert ledit circuit ;
- et une came dont la rotation manuel le opère l'actionnement des moyens de verrouillage du couvercle, la libération du mécanisme d'immobilisation et la commande du contacteur à la fermeture.

En fait, les moyens de verrouillage étaient formés par deux tiges verticales diamétralement opposées l'une à l'autre par rapport à la cuve, l'une des extrémités de chacune de ces tiges étant prévue épanouie pour prendre appui contre une oreille latérale du couvercle, tandis que l'extrémité opposée portait une bague engagée sur un arbre horizontal propre à se déplacer transversalement sous l'effet de la rotation de la came.

On conçoit qu'un tel agencement implique nécessairement un indexage précis du couvercle amovible dont la mise en place sur la partie supérieure ouverte de la cuve fait appel à des mouvements combinés ; le système est donc difficilement acceptable pour des appareils autres que les centrifugeuses, nécessitant des chargements et vidanges fréquents. Par suite de la symétrie imposée par les deux tiges de verrouillage, les pièces constitutives du dispositif de sécurité doivent être réalisées et montées avec précision, notamment en ce qui concerne le positionnement de la came de commande.

Finalement ce dispositif, particulièrement avantageux dans le cas d'une centrifugeuse, s'est révélé difficilement transposable à des appareillages de structure et d'architecture différentes, tout particulièrement dans le cas des mixeurs-mélangeurs à usage domestique ou pour collectivités.

C'est à cet inconvénient qu'entend plus spécialement remédier la présente invention, laquelle a en outre pour but d'améliorer encore la garantie de fiabilité opérée par le dispositif de sécurité.

L'appareil suivant l'invention est défini à la revendication 1. En fait l'invention consiste essentiellement à rendre la cuve ou bol mobile axialement à l'encontre de moyens élastiques de rappel, afin que son déplacement sous l'effet des moyens de verrouillage associés au couvercle amovible assure la libération du mécanisme d'immobilisation et la commande du contacteur électrique.

Le dessin annexé, donné à titre d'exemple, permettra de mieux comprendre l'invention, les caractéristiques qu'elle présente et les avantages qu'elle est susceptible de procurer :
Fig. 1 est une coupe axiale schématique d'un appareil suivant l'invention, représenté avant manoeuvre en rotation de la came de commande.
Fig. 2 reproduit fig. 1 après manoeuvre de la came précité.
Fig. 3 et 4 sont des coupes de détail à plus grande échelle illustrant la position respective des pièces du mécanisme d'immobilisation angulaire en fig. 1, respectivement en fig. 2.
Fig. 5 et 6 sont des coupes analogues à celles de fig. 3 et 4, mais illustrant un autre mode de mise en oeuvre de l'invention.

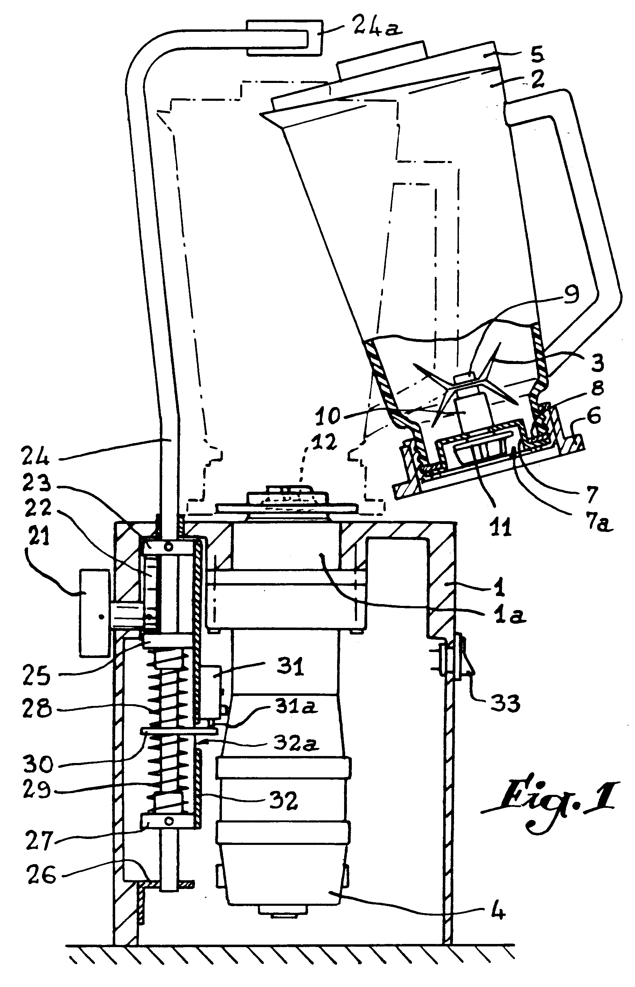

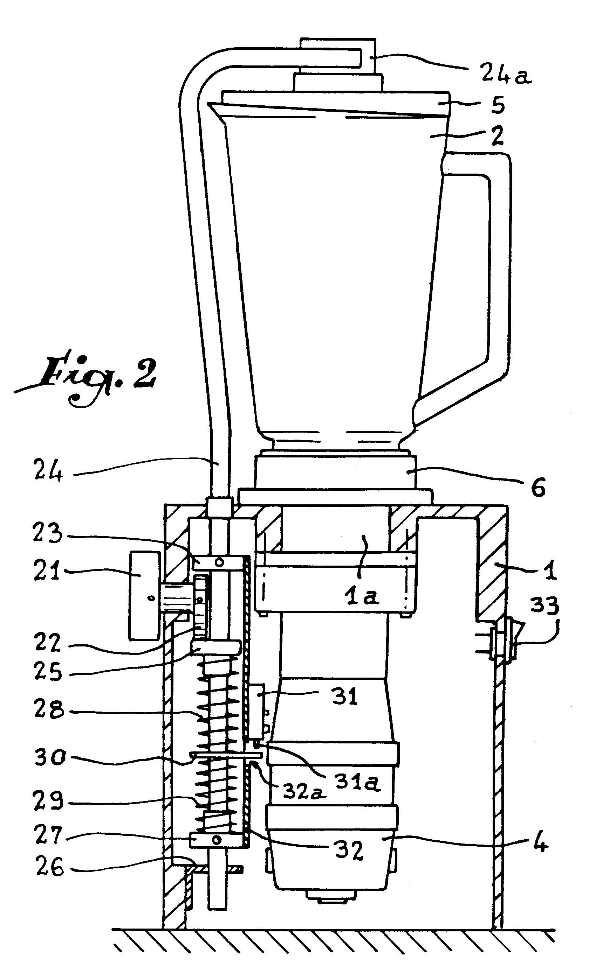

En fig. 1 et 2, la référence 1 désigne le bâti de l'appareil, qui est agencé pour supporter d'une part le bol 2 à l'intérieur duquel tourne l'outil de travail 3, d'autre part le moteur électrique 4 pour l'entraînement en rotation dudit outil 3. Au bol 2 est associé un couvercle amovible 5 conformé pour prendre appui contre le bord de l'ouverture supérieure dudit bol.

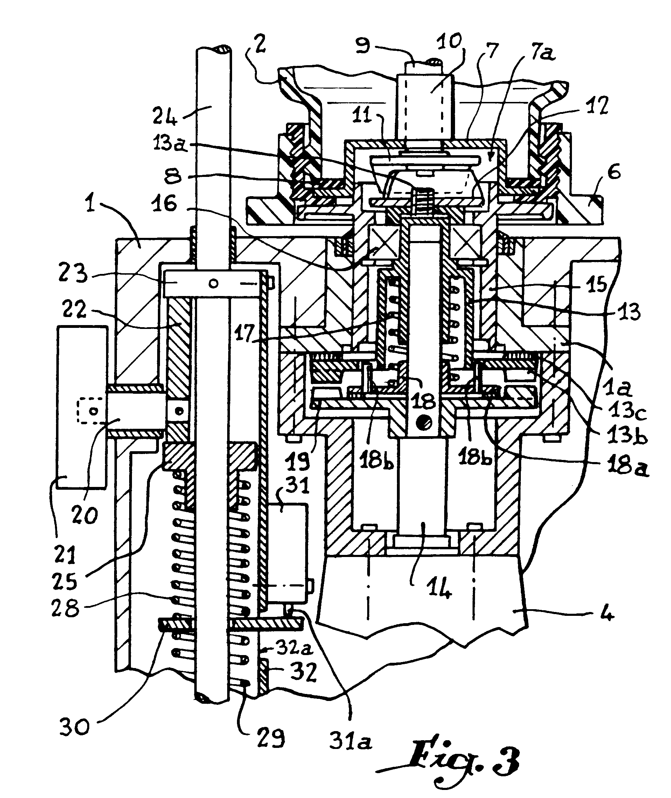

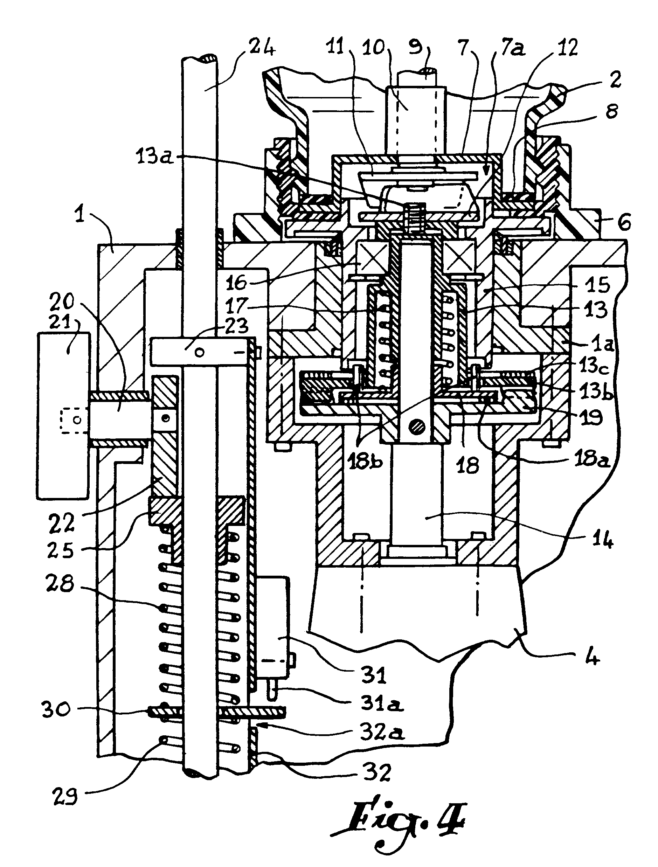

Comme plus particulièrement montré en fig. 3 et 4, la base ouverte du bol 2 est prévue filetée pour se fixer par vissage à l'intérieur d'un écrou 6 auquel sont associés un élément 7 en forme de cuvette ouverte vers le bas, et un joint d'étanchéité 8. L'arbre 9 qui porte l'outil 3 traverse librement un guide 10 solidaire de l'élément 7 et le fond de dernier, afin de pénétrer dans le logement 7a défini par le profil en cuvette dudit élément.

A l'intérieur de ce logement 7a, l'extrémité inférieure de l'arbre 9 est équipée d'un plateau 11 pourvu de doigts aptes à coopérer avec les doigts conjugués d'un plateau 12 calé au sommet d'un bout d'arbre 13a solidaire d'un poussoir axial 13, lequel est lié angulairement à l'arbre 14 du moteur 4 à la manière qui sera décrite plus loin. Les deux plateaux 11 et 12 constituent un dispositif d'accouplement assurant la liaison angulaire entre les arbres 9 et 13a tout en permettant le démontage immédiat de l'ensemble formé par le bol 2, l'écrou 6 et l'élément ou fond 7.

Cet ensemble démontable 2-6-7 repose sur la partie supérieure d'un coulisseau 15 qui opère simultanément le centrage dudit ensemble. Un roulement 16 est interposé entre ce coulisseau 15 et le poussoir 13 afin que ce dernier puisse librement tourner par rapport au premier, retenu angulairement fixe par tout moyen approprié (cannelures, clavette coulissante, etc...).

Le poussoir 13, qui coiffe l'extrémité supérieure de l'arbre 14 du moteur 4, reçoit l'action d'un ressort 17 dont la base prend appui contre un disque 18 monté fou sur ledit arbre 14. La face inférieure du disque 18 est munie d'une garniture annulaire de friction 18a que le ressort 17 tend à maintenir appliquée contre un plateau de crabotage 19 goupillé sur l'arbre 14. Ce plateau 19 coopère avec un plateau conjugué 13b constitué par la base annulaire du poussoir 13, des colonnettes 18b solidaires du disque 18 assurant la liaison angulaire entre ce dernier et le plateau supérieur de crabotage 13b tout en permettant le libre coulissement axial de ces deux pièces. On observera que la face supérieure du plateau 13b comporte une garniture annulaire de friction 13c destinée à venir porter contre la face termina le inférieure du moyeu central 1a du bâti 1 qui renferme le coulisseau 15.

La paroi latérale du bâti 1 supporte à rotation un petit arbre horizontal 20 sur les extrémités duquel sont calés un volant de manoeuvre 21 et une came 22 formée par un disque à profil circulaire montée de manière excentrée sur ledit arbre 20. La périphérie de cette came 22 est destinée à porter d'une part contre une butée 23 goupillée sur une tige verticale 24 guidée dans la paroi supérieure du bâti 1, d'autre part contre une douille inférieure 25 portée à coulissement axial par la tige précitée.

Comme montré en fig. 1 et 2, la tige 24 est repliée à l'équerre à son sommet pour supporter une bague de pression 24a orientée suivant l'axe de l'outil 3 de façon à venir prendre appui contre la partie centrale du couvercle 5 lorsque celui-ci obture l'ouverture du bol 2. La partie inférieure de la tige 24, guidée par une console 26 rapportée à l'intérieur du bâti 1, est axialement solidaire d'une butée 27.

Entre la butée inférieure 27 et la douille coulissante 25 sont interposés deux ressorts 28 et 29, prévus de part et d'autre d'un doigt 30. Celui-ci est destiné à assurer la commande d'un contacteur 31 branché sur le circuit qui alimente le moteur électrique 4. Ce contacteur 30 est du type monostable, en étant agencé de manière à maintenir ouvert le circuit précité aussi longtemps que son organe d'actionnement ou bouton 31a est retenu par le doigt 30 ; en d'autres termes, le moteur 4 ne peut être alimenté que lorsque le doigt 30 s'est abaissé pour libérer l'organe 31a qui s'abaisse lui-même sous l'effet des moyens élastiques qui lui sont associés. On notera encore que le contacteur 31 est fixé, non pas sur le bâti 1, mais sur une entretoise 32 qui réunit rigidement les deux butées 23 et 27, de sorte qu'il se déplace verticalement en même temps que la tige 24 ; l'entretoise 32 est échancrée en 32a pour permettre le passage du doigt 30.

Le fonctionnement du dispositif de sécurité découle des explications qui précèdent et se comprend aisément.

A la position de repos illustrée en fig. 1 et 3, la partie excentrée de la came 22 est tournée vers le haut, de sorte que la tige 24 et sa bague de pression 24a se trouvent en position haute. Le ressort 17 maintient en position haute l'équipage mobile associé au bol 2 et formé par le coulisseau 15, le poussoir 13 et l'écrou 6. Les deux plateaux de crabotage 19 et 13b sont écartés l'un de l'autre, de sorte que l'outil de travail 3 est dissocié de l'arbre 14 du moteur 4 tout en étant bloqué par portée de la garniture 13c contre la face inférieure du moyeu 1a. Le contacteur 31 interdit toute alimentation du moteur 4.

Pour utiliser l'appareil après remplissage du bol 2 et mise en place du couvercle 5, l'opérateur doit manoeuvrer en rotation le volant 31 afin d'amener la partie excentrée de la came 22 à se disposer vers le bas. La tige 24 s'abaisse donc, la bague 24a venant alors prendre appui contre le couvercle 5 qui repousse vers le bas le bol 2 à l'encontre du ressort 17. On arrive ainsi à la position de fonctionnement illustrée en fig. 2 et 4 où l'on peut voir que l'écrou 6 est venu en appui contre la face supérieure du bâti 1.

Par suite de cet abaissement, lé plateau 13b, dont la garniture 13c n'est plus au contact du moyeu 1a, vient coopérer avec le plateau 19, si bien que l'outil 3 est lié angulairement à l'abre 14 à travers le poussoir 13. Cet abaissement cesse lorsque l'écrou 6 est en appui contre le bâti 1, mais l'alimentation électrique du moteur 4 n'est pas encore autorisée puisque le contacteur 31 porté par l'entretoise 32 est descendu avec la tige 24 : le moteur 4 ne peut être mis en marche, même si l'interrupteur général 33 est manoeuvré.

Ce n'est que lorsque la partie excentrée de la came 22 s'est complètement déplacée vers le bas et a repoussé la douille 25 à l'encontre du ressort 28 que le doigt 30 s'abaisse à l'encontre du ressort 29 et libère complètement le bouton 31a, en assurant l'alimentation du moteur 4 à travers le contacteur 31.

On comprend que pour arrêter le fonctionnement de l'appareil, il suffit à l'utilisateur de manoeuvrer le volant 21 en sens inverse pour ramener les pièces à la position suivant fig. 1 et 3. En premier lieu, le contacteur 31 ouvre le circuit d'alimentation du moteur 4 ; immédiatement après, l'équipage mobile associé au bol 2 se déplace vers le haut, de sorte que l'arbre 14, dissocié du poussoir 13 et de l'arbre 9 par suite de la séparation des plateaux de crabotage 13a et 19, est immobilisé angulairement par portée de la garniture 13c contre la face inférieure du moyeu 1a.

On conçoit effectivement que dès que le plateau de crabotage 13b s'est élevé et n'est donc plus en contact avec le plateau conjugué 19, la garniture 13c vient porter contre la face terminale du moyeu 1a et immobilise en conséquence le poussoir 13 et l'outil 3. Cette action de freinage énergique est transmise par les colonnettes 18b au disque 18 dont la garniture 18a vient s'appliquer contre le plateau 19 qui est ainsi freiné et qui immobilise en conséquence l'arbre 14 du moteur 4.

On se retrouve finalement à la position illustrée en fig. 1 et 3, de sorte que le bol 2, dont le couvercle 5 a été libéré par suite du déplacement vers le haut de la bague 24a et de la tige 24, est susceptible d'être retiré de l'appareil.

Dans la description qui vient d'être faite, on a supposé que le mécanisme d'immobilisation angulaire comprenait à la fois des moyens de freinage et des moyens de crabotage. Cette structure n'a toutefois rien d'obligatoire et l'on peut très bien se contenter d'un système unique, en ayant recours aux seuls moyens de freinage lorsque l'inertie présentée par l'outil 3 est prépondérante, ou aux seuls moyens de crabotage lorsque la puissance du moteur électrique 4 dépasse largement l'effet d'inertie de l'outil.

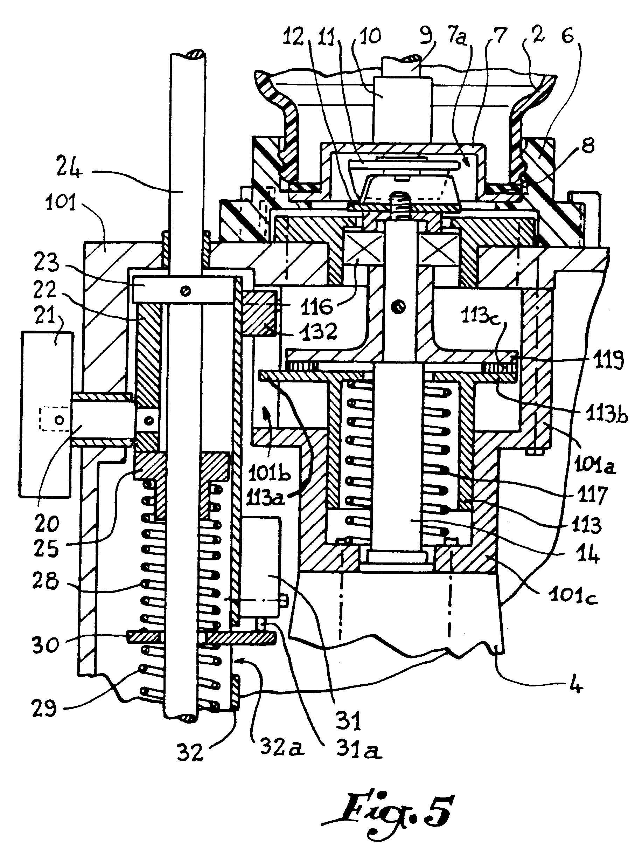

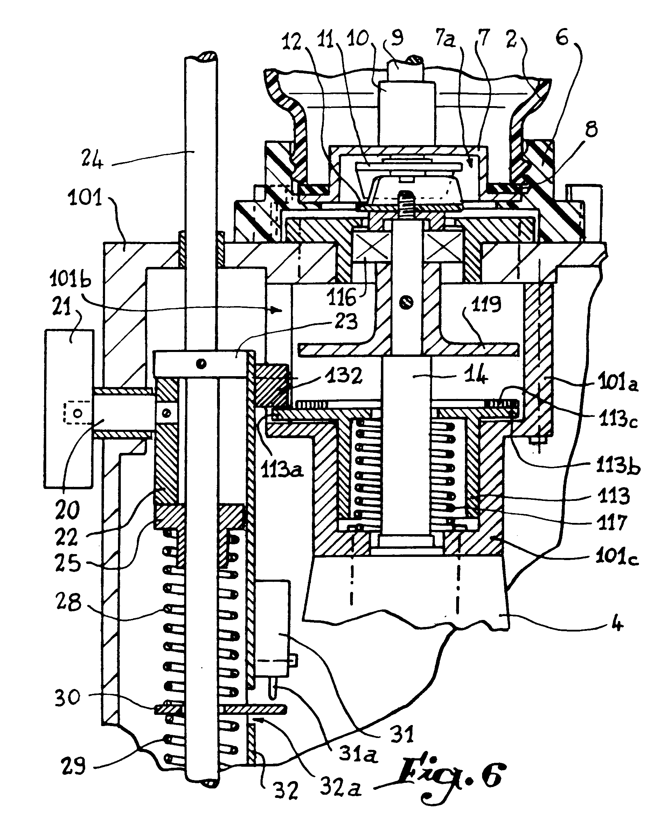

Fig. 5 et 6 illustrent une variante de mise en oeuvre de l'invention dans laquelle on retrouve une came 22 manoeuvrée à l'aide d'un volant 21 pour le déplacement vertical d'une tige unique 24. Comme dans la forme de réalisation suivant fig. 1 à 4, cette tige 24 est apte à maintenir le couvercle 5 appliqué contre l'ouverture du bol 2, et elle est associée à des ressorts 28 et 29 et à un doigt 30 en vue de la commande du contacteur 31.

Par contre, le bol amovible 2 est fixe, en ce sens que l'écrou 6 est verrouillé de toute manière appropriée contre la face supérieure du bâti, ici référencé 101. Pour la commande du mécanisme d'immobilisation angulaire, l'entretoise 32, liée à la tige 24, porte un bossage latéral 132 profilé pour venir prendre appui, lors de l'abaissement de cette tige 24, contre un plateau 113b solidaire d'un poussoir cylindrique 113 et équipé d'une garniture de friction 113c. Ce poussoir 113, immobilisé angulairement par engagement d'un bossage latéral 113a dans une lumière verticale 101b du moyeu 101a du bâti 101, est guidé dans un prolongement inférieur 101c de ce moyeu et reçoit l'action d'un ressort 117. Celui-ci tend ainsi à maintenir la garniture 113c appliquée contre un disque 119 qui est goupillé sur l'arbre 14 du moteur 4, entre le plateau 113c et le roulement 116 associé à l'extrémité supérieure dudit arbre 14. Cette extrémité supérieure est directement solidaire du plateau d'accouplement 12.

Fig. 6 fait bien apparaître que l'abaissement de la tige 24 assure le déplacement axial du poussoir 113 dont la garniture 113c libère le disque 119 et l'arbre 14, de sorte que cet arbre 14 peut tourner dès que le stator du moteur 4 est alimenté à travers le contacteur 31. Le freinage est automatiquement opéré dès la remontée de la tige 24.

Il va de soi qu'à ce système de freinage peut être substitué ou associé un système de crabotage analogue à celui décrit en référence à fig. 1 à 4.

## Revendications

1. Appareil électrique pour le traitement de produits alimentaires, du genre dans lequel un outil de travail (3) est entraîné par un moteur électrique (4) pour tourner au fond d'un bol (2) fermé par un couvercle amovible (5) auquel est associé un dispositif de sécurité qui comprend en combinaison :
- des moyens de verrouillage (24-24a) prenant appui contre le couvercle (5) en vue de l'appliquer contre le bord de l'ouverture du bol (2) ;
- un mécanisme d'immobilisation angulaire (13-18-19) agencé pour agir élastiquement sur l'arbre moteur (14) du moteur (4) en vue d'opérer son blocage ;
- un contacteur électrique (31) qui est branché sur le circuit d'alimentation du moteur (4) et qui tend à maintenir ouvert ledit circuit ;
- et une came (22) dont la rotation manuel le opère l'actionnement des moyens de verrouillage, la libération du mécanisme d'immobilisation et la commande du contacteur à la fermeture,
caractérisé en ce que le bol (2)) est prévu mobile axialement à l'encontre de moyens élastiques de rappel (17), afin que ce soit son déplacement axial sous l'effet des moyens de verrouillage (24-24a) lors de la manoeuvre de la came (22) qui assure la libération du mécanisme d'immobilisation et la commande du contacteur.

2. Appareil suivant la revendication 1, caractérisé en ce que le bol (2) prend appui contre un coulisseau (15) relié à un poussoir tournant (13) qui coiffe l'extrémité supérieure de l'arbre (14) du moteur (4) et qui est lié angulairement audit arbre à travers le mécanisme d'immobilisation angulaire.

3. Appareil suivant la revendication 2, caractérisé en ce que le mécanisme d'immobilisation angulaire comprend une garniture de friction (13c) fixée contre un plateau (13b) solidaire du poussoir axial (13) afin de porter, sous l'action des moyens élastiques (17) associés audit poussoir, contre une partie annulaire fixe (1a).

4. Appareil suivant la revendication 2, caractérisé en ce que le mécanisme d'immobilisation angulaire comprend deux plateaux de crabotage co-axiaux dont l'un (13b) est solidaire du poussoir axial (13) tandis que l'autre (19) est goupillé sur l'arbre (14) du moteur (4), ces deux plateaux étant maintenus axialement écartés l'un de l'autre par les moyens élastiques (17) associés au poussoir (13).

5. Appareil suivant la revendication 2, caractérisé en ce que le mécanisme d'immobilisation angulaire comprend simultanément des moyens de freinage (13b-13c) et des moyens de crabotage (13b-19).

6. Appareil suivant l'une quelconque des revendications 1 à 5, caractérisé en ce que les moyens de verrouillage comprennent une tige unique (24) qui est orientée verticalement et dont le sommet porte une bague de pression (24a) apte à prendre appui contre la partie centrale du couvercle (5).

7. Appareil suivant la revendication 6, caractérisé en ce que la came (22) est disposée entre une butée (25) fixée axialement sur la tige (24) et une douille (25) qui coulisse sur ladite tige et qui est soumise à l'action d'au moins un ressort (28, 29), lequel prend appui contre une seconde butée (27) rigidement fixée à la tige.

8. Appareil suivant la revendication 7, caractérisé en ce que le contacteur (31) est porté par une entretoise (32) fixée à la tige (24) afin de se déplacer en même temps que cette dernière, le bouton d'actionnement (31a) de ce contacteur (31) étant actionné par un doigt (30) qui est monté à coulissement sur ladite tige et sur lequel s'exercent en permanence les actions opposées de deux ressorts (28, 29).

9. Appareil suivant l'une quelconque des revendication 2 à 8, du genre dans lequel le bol (2) est prévu démontable avec son outil de travail (3), caractérisé en ce que l'arbre (9) qui porte ledit outil est relié angulairement au poussoir axial (13) par un dispositif d'accouplement (11-12).

## Claims

1. Electric appliance for processing food products, of the type in which a working tool (3) is driven by an electric motor (4) for rotating at the bottom of a bowl (2) closed by a removable lid (5) with which is associated a safety device which comprises, in combination:
- locking means (24-24a) abutting against the lid (5) with a view to applying it against the edge of the opening of the bowl (2);
- a mechanism (13-18-19) for angular immobilization arranged to act elastically on the drive shaft (14) of the motor (4) with a view to effecting blocking thereof;
- an electric switch (31) which is connected to the supply circuit of the motor (4) and which tends to maintain said circuit open;
- and a cam (22) whose manual rotation effects actuation of the locking means, release of the immobilization mechanism and control of closure of the contactor,
characterized in that the bowl (2) is provided to be axially mobile against elastic return means (17), in order that it is its axial displacement under the effect of the locking means (24-24a) during manoeuvring of the cam (22), which ensures release of the immobilization mechanism and control of the contactor.

2. Appliance according to Claim 1, characterized in that the bowl (2) abuts against a slide block (15) connected to a rotating pusher (13) which covers the upper end of the shaft (14) of the motor (4) and which is angularly connected to said shaft through the angular immobilization mechanism.

3. Appliance according to Claim 2, characterized in that the angular immobilization mechanism comprises a friction lining (13c) fixed against a plate (13b) fast with the axial pusher (13) in order to bear, under the action of the elastic means (17) associated with said pusher, against a fixed annular part (1a).

4. Appliance according to Claim 2, characterized in that the angular immobilization mechanism comprises two coaxial positive-clutch plates of which one (13b) is fast with the axial pusher (13) while the other (19) is pinned on the shaft (14) of the motor (4), these two plates being maintained axially spaced apart from each other by the elastic means (17) associated with the pusher (13).

5. Appliance according to Claim 2, characterized in that the angular immobilization mechanism comprises, simultaneously, braking means (13b-13c) and positive-clutch means (13b-19).

6. Appliance according to any one of Claims 1 to 5, characterized in that the locking means comprise a single rod (24) which is oriented vertically and whose apex bears a pressure ring (24a) adapted to abut against the central part of the lid (5).

7. Appliance according to Claim 6, characterized in that the cam (22) is disposed between a stop (25) fixed axially on the rod (24) and a bush (25) which slides on said rod and which is subjected to the action of at least one spring (28, 29), which abuts against a second stop (27) rigidly fixed to the rod.

8. Appliance according to Claim 7, characterized in that the contactor (31) is borne by a distance piece (32) fixed to the rod (24) in order to move at the same time as the latter, the button (31a) for actuating this contactor (31) being actuated by a finger (30) which is mounted to slide on said rod and on which the opposite actions of two springs (28, 29) are permanently exerted.

9. Appliance according to any one of Claims 2 to 8, of the type in which the bowl (2) is provided to be dismountable with its working tool (3), characterized in that the shaft (9) which bears said tool is angularly connected to the axial pusher (13) by a coupling device (11-12).

## Patentansprüche

1. Elektrogerät zur Behandlung von Lebensmitteln, bei dem ein Arbeitswerkzeug (3) von einem Elektromotor (4) so angetrieben wird, daß es sich am Boden eines Bechers (2) dreht, der durch einen entfernbaren Deckel (5) verschlossen ist, dem eine Sicherheitsvorrichtung mit folgenden kombinierten Merkmalen zugeordnet ist:
eine Verriegelungseinrichtung (24-24a), die sich am Deckel (5) im Hinblick auf dessen Anlage am Öffnungsrand des Bechers (2) abstützt;
ein Festlegemechanismus zum winkelmäßigen Anhalten (13, 18, 19), der zur elastischen Einwirkung auf die Motorwelle (14) des Motors (4) im Hinblick auf die Betätigung dessen Blockade betätigt wird;
ein elektrischer Kontaktgeber (31), der an den Stromversorgungskreislauf des Motors (4) angeschlossen ist und der diesen Kreislauf geöffnet zu halten versucht; sowie
eine Nockenscheibe (22), deren Drehung von Hand die Betätigung von Verriegelungseinrichtungen, die Freigabe des Festlegemechanismus und die Steuerung des Kontaktgebers zum Schließen ausführt,
dadurch gekennzeichnet,
daß der Becher (2) axial beweglich gegen die Wirkung von elastischen Rückholmitteln (17) angeordnet ist, damit seine axiale Verschiebung unter Einwirkung der Verriegelungseinrichtung (24, 24a) bei der Betätigung der Nockenscheibe (22) stattfindet, welche die Freigabe des Festlegungsmechanismus und die Steuerung des Kontaktgebers sicherstellt.

2. Gerät nach Anspruch 1,
dadurch gekennzeichnet, daß der Becher (2) sich an einem Schlitten (15) abstützt, der mit einem drehbaren Schieber (13) verbunden ist, der das obere Ende der Welle (14) des Motors (4) abdeckt und der mit der Welle winkelmäßig über den winkelmäßigen Festlegemechanismus verbunden ist.

3. Gerät nach Anspruch 2,
dadurch gekennzeichnet, daß der winkelmäßige Festlegemechanismus eine Reibgarnitur (13c) umfaßt, die an einer mit dem Axialschieber (13) verbundenen Scheibe (13b) befestigt ist, um unter der Wirkung von dem Schieber zugeordneten, elastischen Mitteln (17) sich an einem festen, ringförmigen Teil (1a) abzustützen.

4. Gerät nach Anspruch 2,
dadurch gekennzeichnet, daß der winkelmäßige Festlegemechanismus zwei koaxiale Klauenkupplungsscheiben umfaßt, von denen die eine (13b) mit dem Axialschieber (13) fest verbunden ist, während die andere (19) mit der Welle (14) des Motors (4) verstiftet ist, und daß die beiden Scheiben axial in gegenseitigem Abstand durch die dem Schieber (13) zugeordneten elastischen Mittel (17) gehalten werden.

5. Gerät nach Anspruch 2,
dadurch gekennzeichnet, daß der winkelmäßige Festlegemechanismus gleichzeitig Bremsmittel (13b, 13c) und Klauenkupplungsmittel (13b-19) umfaßt.

6. Gerät nach einem der Ansprüche 1 bis 5,
dadurch gekennzeichnet, daß die Verriegelungseinrichtung eine einzelne Stange (24) umfaßt, die vertikal ausgerichtet ist und dessen oberes Ende einen Druckring (24a) trägt, der zur Abstützung des mittleren Teils des Deckels (5) ausgebildet ist.

7. Gerät nach Anspruch 6,
dadurch gekennzeichnet, daß die Nockenscheibe (22) zwischen einem axial an der Stange (24) befestigten Anschlag (23) und einer auf der Stange verschiebbaren Muffe (25) angeordnet ist, die unter der Wirkung von mindestens einer Feder (28, 29) steht, welche sich an einem fest an der Stange befestigten zweiten Anschlag (27) abstützt.

8. Gerät nach Anspruch 7,
dadurch gekennzeichnet, daß der Kontaktgeber (31) von einem an der Stange (24) befestigten Steg (32) getragen wird, um sich zusammen mit der Stange zu verschieben, und daß der Betätigungsknopf (31a) des Kontaktgebers (31) durch einen Daumen (30) betätigt wird, der verschiebbar auf der Stange montiert ist und an dem zwei sich wirkungsmäßig gegenüberstehende Federn (28, 29) ständig anliegen.

9. Gerät nach einem der Ansprüche 2 bis 8,
bei dem der Becher (2) zusammen mit seinem Arbeitswerkzeug (3) demontierbar vorgesehen ist, dadurch gekennzeichnet, daß die Welle (9), welche das Werkzeug dreht, winkelmäßig mit dem axialen Schieber (13) über eine Kupplungseinrichtung (11, 12) verbunden ist.
